# EUROPEAN PATENT SPECIFICATION

(11) **EP 3 632 721 B1**
(45) Date of publication and mention of the grant of the patent: **20.01.2021**
(21) Application number: 19192234.3
(22) Date of filing: 03.10.2018
(51) Int. Cl.: B60H 1/00, B60H 1/32

(54) **A MOTOR-VEHICLE AUXILIARY AIR CONDITIONING SYSTEM**
HILFSKLIMATISIERUNGSSYSTEM FÜR KRAFTFAHRZEUG
SYSTÈME DE CONDITIONNEMENT D'AIR AUXILIAIRE DE VÉHICULE AUTOMOBILE

(43) Date of publication of application: 08.04.2020
(62) Divisional of application: 18198401.4
(73) Proprietor: C.R.F. Società Consortile per Azioni, 10043 Orbassano (Torino) (IT)
(72) Inventor: CARZANA, Mr. Andrea, I-10135 Torino (IT); LAZZARO, Mr. Pietro, I-10135 Torino (IT); MATTIELLO, Mr. Fabrizio, I-10043 Orbassano (Torino) (IT); FERRARIS, Mr. Walter, I-10043 Orbassano (Torino) (IT)
(74) Representative: Notaro, Giancarlo

(56) References cited:
- WO-A1-2017/155880
- US-A1- 2008 085 672
- US-A1- 2016 144 692

## Description

### Field of the invention

The present invention relates to motor-vehicles equipped with an air conditioning system comprising:
- a main refrigeration circuit, including a compressor, a condenser which receives a flow of refrigerant from the compressor, an expansion valve which receives the refrigerant leaving the condenser, and an evaporator which receives the expanded fluid from said expansion valve, and
- an air guide duct, for guiding a flow of air through the evaporator of said main circuit and towards the passenger compartment of the motor-vehicle, said air guide duct being provided with at least one electrically-operated fan, upstream of the evaporator, for feeding said air flow through said air guide duct.

### Prior art

According to the conventional art, the compressor of the aforesaid main refrigeration circuit is typically driven by the internal combustion engine of which the motor-vehicle is provided.

Again according to the traditional art, heating of the passenger compartment of the motor-vehicle is obtained by activating the passage of an air flow directed towards the passenger compartment of the motor-vehicle through a heat exchanger, acting as a passenger compartment heater, which is flowed through by the coolant of the internal combustion engine.

In conventional solutions of the type indicated above, the problem arises of enabling activation of a refrigeration or heating mode of the passenger compartment of the motor-vehicle when the driver is still outside the motor-vehicle, for example, after the motor-vehicle has remained parked with the engine off for a prolonged time in a high temperature environment, exposed to solar radiation, or in a low temperature environment. In a conventional motor-vehicle of the type indicated above, activation of a cooling mode or of a heating mode of the passenger compartment before the driver even enters the motor-vehicle would imply the ignition of the internal combustion engine, but this operating condition is generally prohibited by current legislations in various countries, unless the vehicle is an electric or hybrid vehicle. For vehicles equipped with an internal combustion engine, the problem arises of activating the aforesaid operating modes without requiring ignition of the internal combustion engine. Of course, the aforesaid main refrigeration circuit could be activated by providing an electrically-operated compressor. However, in a conventional motor-vehicle, the power absorbed by the compressor of the main refrigeration circuit would entail a dangerous decrease in the charge of the on-board electric battery of the motor-vehicle.

A motor-vehicle according to the preamble of claim 1 is known from US 2016/144692 A1.

### Object of the invention

The object of the intervention of the present invention is to solve the aforementioned problems, in particular by producing a motor-vehicle equipped with an internal combustion engine that can have a cooling or heating mode of the passenger compartment of the motor-vehicle even if the vehicle is parked and without a driver on board.

Another object of the invention is that of achieving the aforesaid objective with constructively simple and inexpensive means.

Another object of the invention is to allow ventilation of the passenger compartment of the motor-vehicle, when the motor-vehicle is parked with the engine off, also by exploiting the circulation of natural air through the passenger compartment of the motor-vehicle.

Another object of the invention is to propose a mode for an automatic activation of the air conditioning of the passenger compartment when the driver is not on-board, which can be controlled simply and easily by an electronic interface device, such as a smart-phone, a tablet or the like.

### Summary of the invention

In view of achieving one or more of the aforesaid objects, the invention relates to a motor-vehicle having the characteristics of claim 1.

The aforesaid auxiliary refrigeration circuit can be produced with a compressor of a size and power that is considerably smaller than the compressor of the main refrigeration circuit. The auxiliary circuit compressor only has the function of activating the inflow of cold or hot air into the passenger compartment before the driver gets into the motor-vehicle, not in order to quickly bring the passenger compartment to a comfortable temperature for the driver, but simply in order to bring the passenger compartment temperature closer to the required temperature. In this way, once on board, the driver can turn on the motor-vehicle and activate the main refrigeration circuit, or the passenger compartment heater, with the advantage of being able to reach the required temperature in a shorter time compared to conventional systems and/or with a lower energy consumption compared to conventional systems.

The motor-vehicle according to the invention comprises one or more electronic control circuits, for example, in the form of microprocessors, programmed to activate a refrigeration mode and a heating mode of the passenger compartment when the motor-vehicle is parked, with the engine off, with the driver outside the motor-vehicle, said refrigeration mode and said heating mode comprising activating said auxiliary refrigeration circuit and controlling said valve system (in the case of the first embodiment) or said communication valve (in the case of the second embodiment) in such a way as to enable an air flow into the passenger compartment of the motor-vehicle, which is cooled by said evaporator of the auxiliary refrigeration circuit, or which is heated by said condenser of the auxiliary refrigeration circuit.

In another embodiment of the invention, the motor-vehicle further comprises:
- one or more electrically-operated valves arranged on the motor-vehicle structure, so that the passenger compartment of the motor-vehicle communicates with the external environment,
- one or more electrically-operated windows, and
- one or more electronic control circuits programmed to activate a ventilation mode of the passenger compartment when the motor-vehicle is parked, with the engine off, even with the driver outside the motor-vehicle, said passenger compartment ventilation mode comprising controlling the partial opening of one or more windows, and the opening of one or more of shutters to generate a natural flow of air from the bottom upwards through the passenger compartment of the motor-vehicle.

When the motor-vehicle is parked, for example, in the summer, thus exposed to solar radiation, opening of the aforesaid valves, typically positioned in a rear/lower part of the motor-vehicle, and the simultaneous partial opening of the side windows of the motor-vehicle creates the natural circulation of air through the passenger compartment, starting from the aforesaid shutters (in a low position) to the window openings (in a high position).

### Detailed description of the embodiments of the invention

Further characteristics and advantages of the invention will become apparent from the description that follows with reference to the attached drawings, provided purely by way of non-limiting example, wherein:
- Figure 1 is a schematic view of a Heating, Ventilation and Air Conditioning (HVAC) assembly for a motor-vehicle, produced according to the prior art,
- Figure 2 illustrates the assembly of Figure 1 modified according to an embodiment which does not form part of the present invention, the description of which is useful for understanding the invention,
- Figures 3-5 illustrate three different operating conditions of the assembly of Figure 2,
- Figure 6 is a schematic view of the main refrigeration circuit and of the auxiliary refrigeration circuit,
- Figures 7-9 are schematic views illustrating different operating conditions of two valves for controlling the flow of air to the condenser and to the evaporator of the auxiliary refrigeration circuit provided in another embodiment which does not form part of the invention,
- Figure 10 is a schematic view of a motor-vehicle equipped with a system for activating the natural circulation of air through the passenger compartment of the motor-vehicle, according to another embodiment of the present invention,
- Figure 11 is a perspective view of a pair of shutters forming part of the system illustrated in Figure 10,
- Figure 12 illustrates a flow chart relating to an example of control methods of the system according to the invention, and
- Figure 13 illustrates a variant of Figure 2, corresponding to a preferred embodiment of the invention.

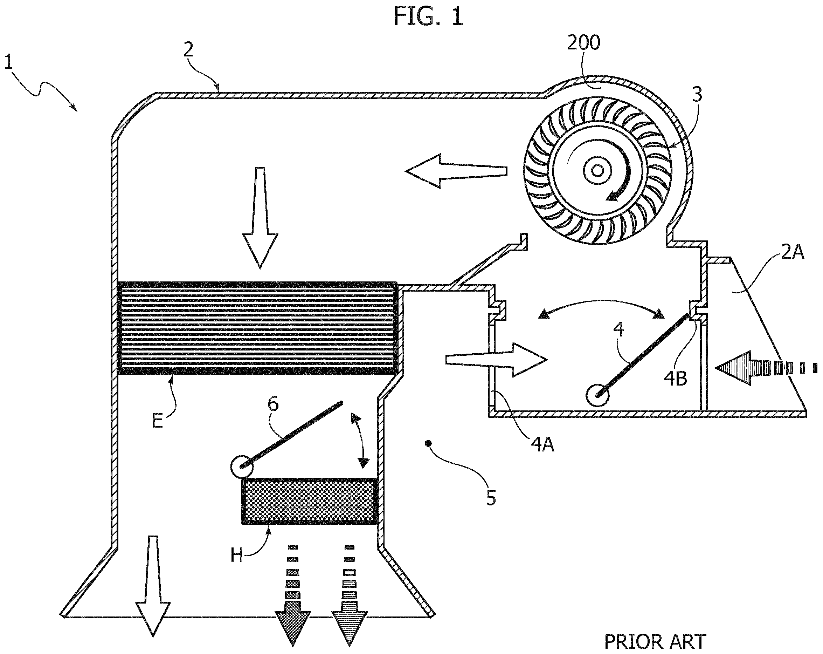

In Figure 1, numeral 1 indicates - in its entirety - an HVAC assembly of heating, ventilation and air conditioning of a motor-vehicle according to the conventional art. The assembly 1 includes an air guide duct indicated - in its entirety - by the reference 2, having an inlet opening 2A for the entry into the duct 2 of an air flow drawn from the external environment by means of an electrically-operated fan 3 located inside the duct 2. A shutter valve 4 is interposed between the inlet opening 2A and the fan 3, which connects the portion of the duct 2 in which the valve 3 is arranged selectively with the inlet opening 2A (when it is required to activate a flow of air from the outside into the duct 2) or with an opening 4A for communication of the duct 2 with the environment 5 inside the passenger compartment of the motor-vehicle (when it is required to recirculate the air of the passenger compartment in the duct 2). In Figure 1, the shutter valve 4 is illustrated in the activation position for circulation of the air of the passenger compartment in the duct 2. In an operating position opposite to that illustrated in Figure 1, rotated anti-clockwise (with reference to Figure 1), the shutter valve 4 obstructs communication with the opening 4A, and leaves the communication of the duct 2 with the inlet opening 2A free.

Again in the case of the conventional solution, an evaporator E is arranged within the duct 2, downstream of the fan 3, which is part of the main refrigeration circuit of which the motor-vehicle is provided.

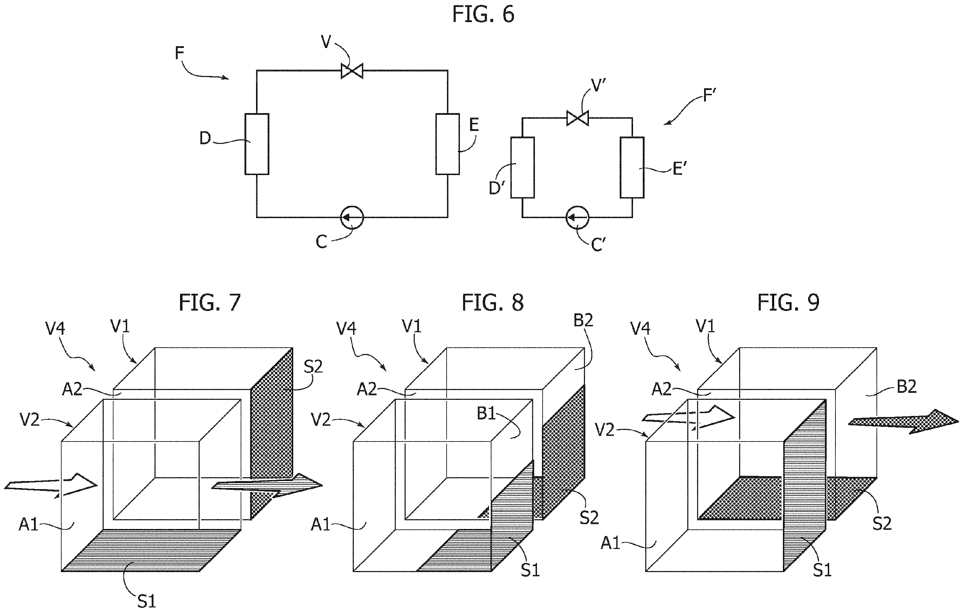

According to the conventional art, the main refrigeration circuit F of the motor-vehicle (see Figure 6) comprises a closed-loop path, crossed by a refrigerant, in which a compressor C, a condenser D, an expansion valve V and an evaporator E are arranged in succession.

Referring again to Figure 1, a passenger compartment heater H is arranged downstream of the evaporator E, consisting of a heat exchanger which is crossed by the coolant of the internal combustion engine. A shutter valve 6 selectively opens and closes the access through the passenger compartment heater H. When the shutter valve 6 is in an open condition, the air flow through the duct 2 also passes partly through the heater H, heating it up. When the shutter valve 6 is in the closed condition, the entire air flow through the duct 2 reaches the passenger compartment of the motor-vehicle without passing through the passenger compartment heater H, but only through the evaporator E, so that, if the main refrigeration circuit is activated, this flow is cooled.

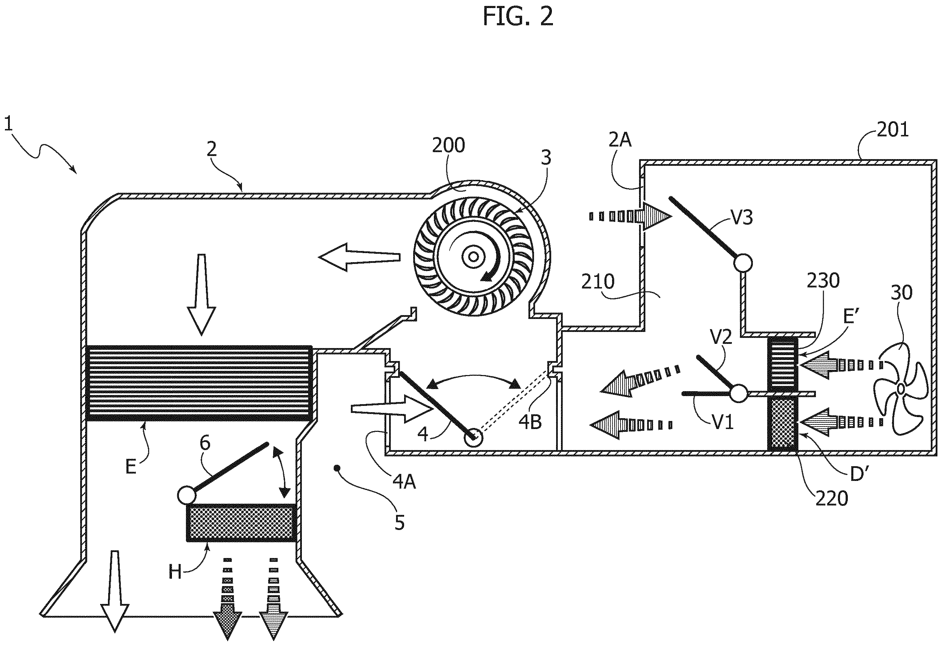

Figure 2 shows the assembly of Figure 1 modified according to an embodiment which does not form part of the present invention. In Figure 2, the parts common to those of Figures 1 are indicated by the same references.

In the case of the systemof figure 2, the HVAC assembly comprises an air guide duct 2 which has a main portion 200, in which the above described components are arranged, with reference to Figure 1 (valve 4, fan 3, evaporator E and heater H), and an auxiliary inlet portion 201, arranged upstream of the main portion 2.

In the case of the system of figure 2, the motor-vehicle is provided with an auxiliary refrigeration circuit F' (the diagram of which is illustrated in Figure 6, together with the diagram of the main refrigeration circuit F), which is constituted per se as a normal refrigeration circuit, including a closed-loop path in which a compressor C', a condenser D', an expansion valve V' and an evaporator E' are arranged in succession (see Figure 6). However, from the constructive point of view, the auxiliary refrigeration circuit has smaller dimensions and power than those of the main refrigeration circuit. In particular, the compressor C' of the auxiliary refrigeration circuit is an electrically-operated compressor, with small dimensions and of reduced power compared to the size and power of the compressor of the main refrigeration circuit.

Returning to Figure 2, , the inlet opening 2A for the entry of an air flow from the outside into the air guide duct 2 is formed in the auxiliary inlet portion 201 of the duct 2, upstream of the main portion 200. The auxiliary inlet portion 201 of the duct 2 defines a by-pass passage 210 within it, which directly connects the inlet opening 2A with the main portion 200 of the duct 2 and, in particular, with the opening 4B for communicating with the portion of the duct in which the fan 3 is arranged.

Inside the auxiliary portion 201 of the air guide duct 2, an air heating duct 220 and an air cooling duct 230 are also defined, arranged parallel to each other and arranged in parallel with respect to the by-pass passage 210. In the air heating passage 220, the condenser D' of the auxiliary refrigeration circuit is interposed. In the air cooling passage 230, the evaporator E' of the auxiliary refrigeration circuit is interposed. In the preferred embodiment shown here, an electrically-operated auxiliary fan 30 is arranged inside the auxiliary portion 201 of the air guide duct 2 to activate an air flow coming from the inlet opening 2A through the passages 220, 230.

The assembly of this embodiment comprises a valve system for enabling the passage of an air flow coming from the inlet opening 2A only through the by-pass passage 210 or only through the air heating passage 220, or only through the air cooling passage 230.

In the example schematically illustrated in Figure 2, the valve system comprises a first shutter valve V1, which is configured to obstruct the passage 220 or leave it open, a second valve V2, which is configured to obstruct the passage 230 or leave it open, and a third valve V3 which is configured to obstruct the passage 210 or leave it open.

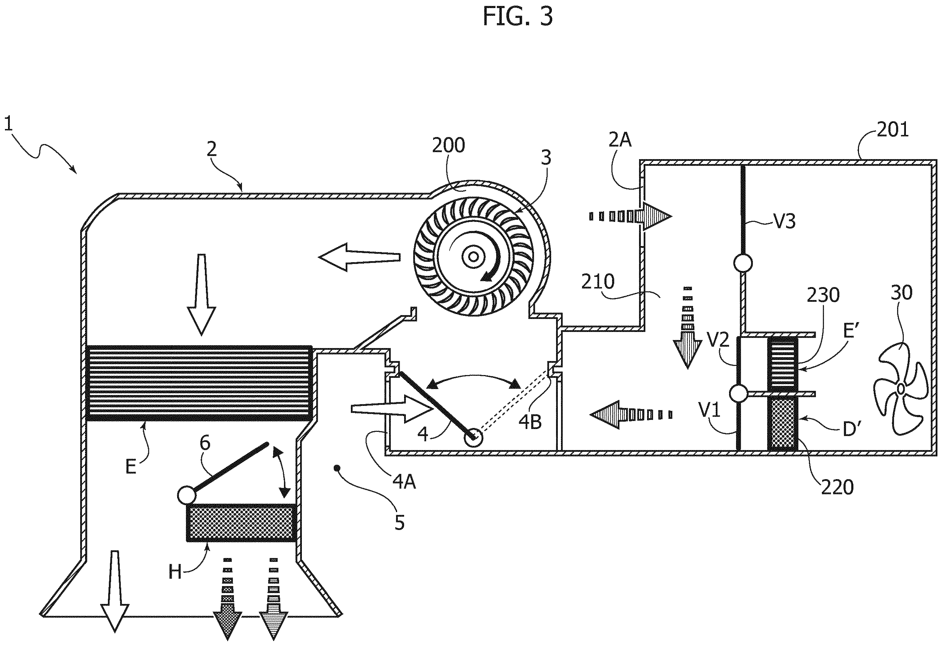

Figures 3-5 illustrate the different operating conditions of the aforesaid valves V1, V2, V3. In the condition of Figure 3, the valves V1, V2 obstruct both passages 220, 230, while the valve V3 obstructs the connection between the inlet opening 2A and the passages 220, 230, while leaving the by-pass passage 210 free. In this condition, the system operates as a conventional system.

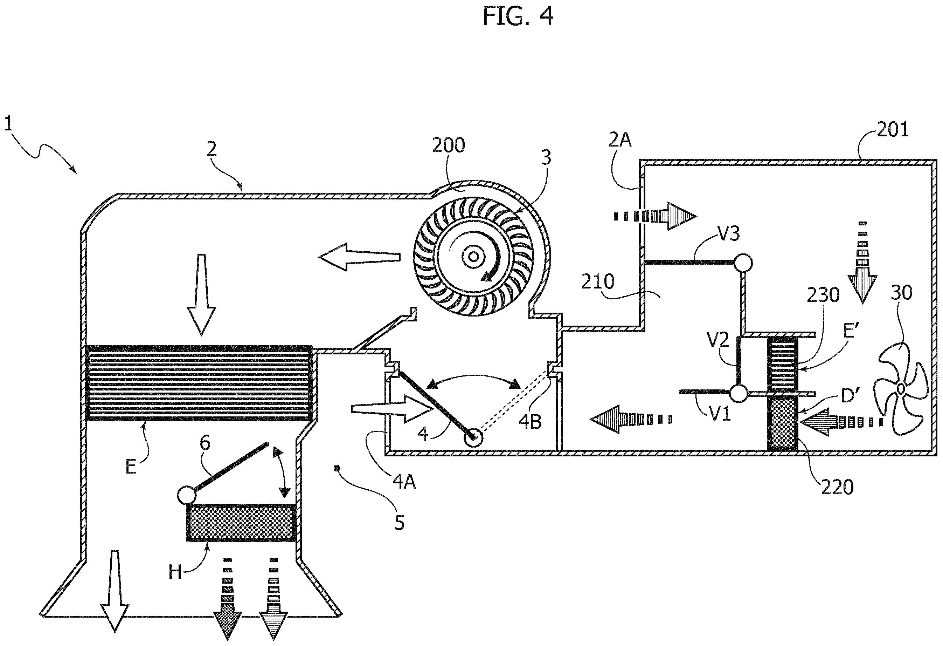

Figure 4 shows an operating condition in which the valve V3 obstructs the connection between the inlet opening 2A and the by-pass passage 210, while it leaves the connection open between the inlet opening 2A and the two passages 220, 230. The valve V2 is in the closed condition, so that it obstructs the outlet of the passage 230, while the valve V1 is in the open condition, so that, in this condition the air flow entering through the opening 2A, activated by the fan 30 (also with an inactive fan 3) proceeds through the passage 220 and through the condenser D', heating up the air.

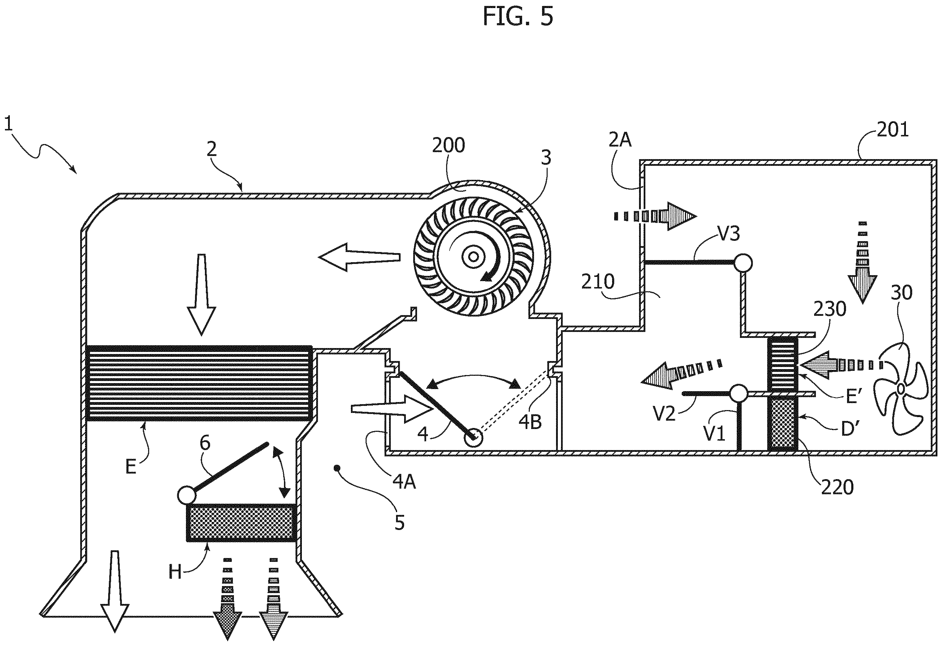

Figure 5 shows an operating condition in which the valve V3 is in the closed position, as in Figure 4, while the valves V1, V2 are in reversed positions with respect to those illustrated in Figure 4, so that only the air flow through the duct 230 and through the evaporator E' is activated. In this condition, the air flow entering the duct 2 activated by the auxiliary fan 30 is cooled before continuing towards the passenger compartment.

As is understood, the assembly allows activation of a flow of cold air or hot air towards the passenger compartment of the motor-vehicle, even when the motor-vehicle is parked with the engine off, with the driver outside the motor-vehicle. The compressor C' of the auxiliary refrigeration circuit is small with reduced power, which has the sole object of causing a temperature change in the passenger compartment of the motor-vehicle in the direction of the required temperature, even before the driver enters the motor-vehicle. This allows the driver, once on board to activate the main refrigeration circuit and reach the required temperature in a shorter time compared to conventional systems and/or with lower energy expenditure.

Figures 7-9 illustrate three different operating conditions of an additional embodiment of a valve assembly V4 incorporating the valves V1, V2. The assembly comprises a single hollow valve body which incorporates the valve body V1 and the valve body V2. The aforesaid hollow body defines an inner chamber of the valve V1 and an inner chamber of the valve V2, which communicate with each other. Each of the two valves V1, V2 has an inlet opening A1, A2 and an outlet opening B1, B2 defined on opposite walls of the valve body. The inlet A1 receives cooled air from the evaporator E'. The inlet A2 receives heated air from the condenser C'.

Each of the two valves V1, V2 comprises a gate valve disc S1 or S2, which is slidably guided between a first end position in which it completely obstructs the outlet opening B1 or B2, and leaves an opening formed on the lower side of the valve body free, and a second end position, in which the gate valve disc S leaves the outlet opening B1 or B2 free, and obstructs the lower opening.

In the illustrated example, each of the two discs S1 and S2 consists of a leaf element guided in a slidable manner along an L-shaped path between its two opposite end positions. Figures 7-9 do not illustrate the constructive details of the assembly V4, nor the actuator means of the movement of the leaf element discs S1 and S2, since they can be made in any known manner. For example, the two ends of each leaf element S1 and S2 could be connected to each other by means of a metal cable including a toothed portion engaged on a drive pinion, controlled by an electric motor.

Figure 7 shows the operating condition in which the disc S1 leaves the outlet B1 free, while the disc S2 obstructs the outlet B2, so that the air cooled by the evaporator E' continues towards the vehicle passenger compartment. In this condition, the heat of the condenser is discharged through the unobstructed lower opening.

Figure 9 shows the operating condition in which the disc S2 leaves the outlet B2 free, while the disc S1 obstructs the outlet B1, so that the air heated by the condenser D' continues towards the vehicle passenger compartment.

Figure 8 shows an intermediate condition, in which the two discs move in counter-phase to each other to achieve opposite operating positions.

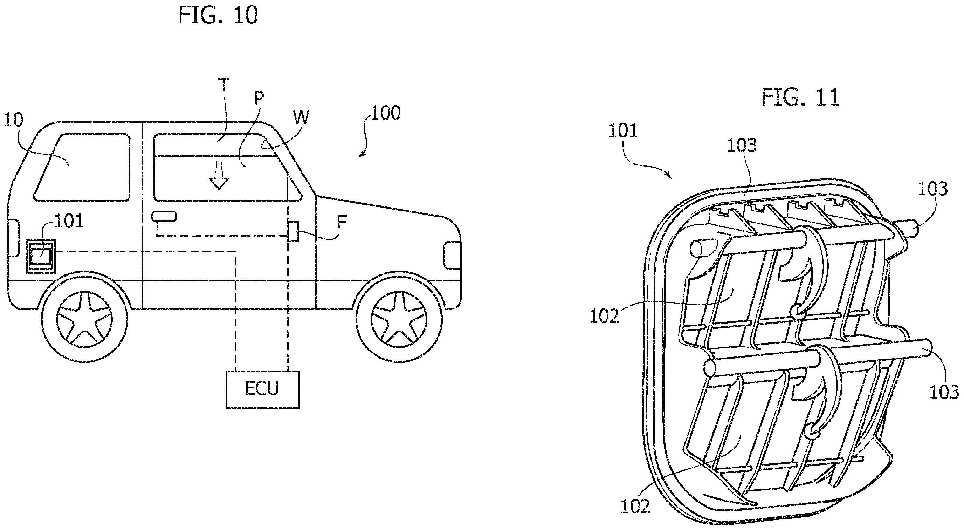

Figures 10, 11 refer to a further aspect of the present invention. A motor-vehicle 100 (Figure 10) is provided at the rear/lower part of the motor-vehicle with one or more electrically-controlled valves 101, of the type illustrated, for example, in Figure 11, wherein, for example, two overlapping shutters 102 are provided, each having an upper side mounted in an articulated manner about a substantially horizontal axis over a supporting frame 103, which is fixed to the bodywork of the motor-vehicle, outside of it. Each shutter valve 102 is rigidly connected to a hinge shaft 103, which can be rotated by means of an electric actuator, for example, an electric motor (not illustrated) to cause each shutter valve 102 to pivot between a closed position and an open position. The electronic control unit (ECU) of the motor-vehicle comprises one or more electronic circuits programmed to simultaneously activate opening of the shutters 102 of each valve 101, and at least partial opening of the windows W of the side doors of the motor-vehicle, by activating a control device F for lowering the glass P of the windows W. The ECU can be programmed to lower the glass P only slightly in order to create communication openings T between the atmosphere and the passenger compartment of the motor-vehicle.

In certain climatic conditions, for example, when the motor-vehicle is parked for a prolonged time in summer, exposed to solar radiation, the opening of the shutters 102 and the partial lowering of the glass P gives rise to the natural circulation of air through the passenger compartment, since it automatically generates a flow of air that enters the passenger compartment from the valve assembly 101, located in a relatively lower position, and the openings T left by the windows P, which are in a higher position.

According to the invention, both the auxiliary refrigerating circuit and the ventilation system illustrated in Figure 10 can be controlled by one or more on-board electronic circuits of the motor-vehicle according to predetermined programs, so as to allow the driver, even before boarding the motor-vehicle, in order to bring the temperature inside the passenger compartment closer to an ideal temperature that allows the best comfort for the user.

According to another aspect of the invention, an automatic activation mode of the passenger compartment air conditioning is provided, without an on-board driver, which can be controlled simply and easily by the user by means of a dedicated application that resides on an electronic interface device, such as a smart-phone, a tablet or the like. The electronic control circuits which are part of the motor-vehicle control unit are programmed to receive input signals from the interface device and to consequently activate an air conditioning mode of the passenger compartment.

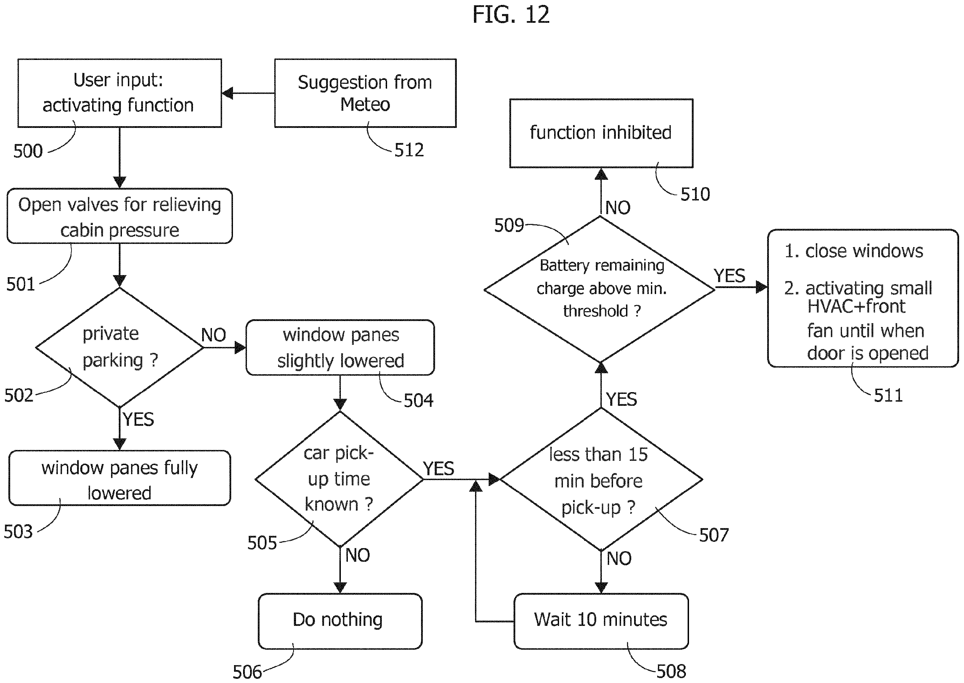

In Figure 12, the block 500 indicates a step in which the user gives an input command to activate the heating or cooling function of the passenger compartment of a parked vehicle with the engine off, with the driver outside the motor-vehicle.

The block 501 refers to a preferred, but non-mandatory step, which therefore may not even be provided, in which the opening of the valve 101 is actuated, to discharge any overpressure existing inside the passenger compartment of the motor-vehicle. The block 502 illustrates a step in which the user is asked to indicate whether the motor-vehicle is in a guarded parking space or not. In the case of an affirmative response, step 503 then follows, in which the complete lowering of the side windows of the motor-vehicle is automatically activated, in order to ventilate the passenger compartment as much as possible. This condition is, therefore, only implemented when the motor-vehicle is in a guarded place, due to security problems against break-ins. In the case of a negative response, step 504 is then activated in which the windows are lowered only slightly, so as to create a ventilation opening in the passenger compartment. In the case of the example illustrated here, after step 504, step 505 then follows, in which the user is asked whether he can predict the time in which he will board the motor-vehicle to use it. In the case of a negative response, step 506 then follows in which the system does not take any further action. In the case of a positive response, step 507 then follows, in which the user is asked whether the time remaining before picking-up the motor-vehicle is less than a determined time (for example, 15 minutes). If the response is negative, the question is repeated at predetermined time intervals, for example, every 10 minutes (block 508). If the response is affirmative, block 509 then follows, in which the system checks whether the charge of the battery of the motor-vehicle is above a minimum threshold. If the response is negative, the system does not activate the function discussed here (block 510). If the response is affirmative, the system initially controls the closing of the windows, and at a later time, activation of the auxiliary refrigeration circuit and activation of the auxiliary fan, and possibly also of the main fan to activate the flow of air into the auxiliary portion 201 of the air guide duct 2. At the same time, the system arranges the valve system in order to enable the flow of air through the evaporator of the auxiliary refrigeration circuit to cool the flow of air entering the passenger compartment, without the need to ignite the internal combustion engine of the motor-vehicle.

As already indicated, the auxiliary refrigeration assembly has a small compressor C' with reduced power which, however, is sufficient to change the temperature inside the passenger compartment of the motor-vehicle, by approaching the required temperature, before the driver climbs on board the motor-vehicle. In this way, once on board, the driver can reach the required temperature by activating the main refrigeration system, but will reach this target in a shorter time and/or with less energy consumption than is possible with a conventional system.

If the required function is that of heating the passenger compartment, the step at block 100 passes directly to block 505, without causing any lowering of the windows of the motor-vehicle. When block 511 is reached, it is therefore not necessary to activate any window closing; the auxiliary refrigeration circuit and the auxiliary fan must be activated, and the valve system must be arranged in such a way as to enable the flow of air through the condenser of the auxiliary refrigeration circuit, which thus heats the air flow entering the passenger compartment of the motor-vehicle. In this case as well, of course, the system is able to change the temperature inside the passenger compartment so that it approaches the required one, in such a way as to make the step to reach the required temperature quicker and/or less energy-consuming when the driver (once he has entered the motor-vehicle) ignites the internal combustion engine and activates the passenger compartment heater. The system may also provide an initial step 512 in which an input is received from a weather forecast system, for example, to avoid opening the windows if the vehicle is in the rain.

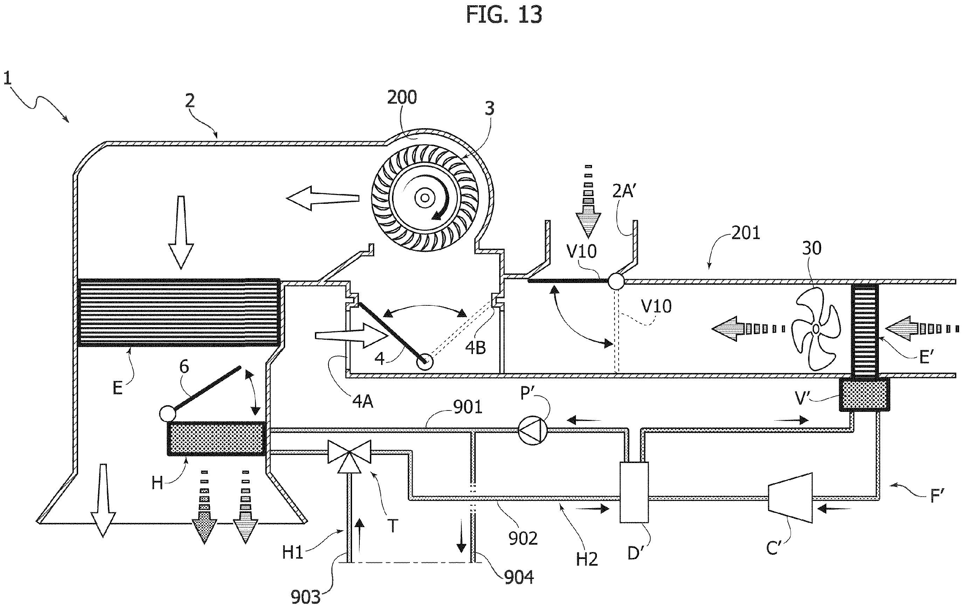

Figure 13 illustrates a preferred embodiment of the invention. In Figure 13, the parts in common with Figure 2 and with Figure 6 are indicated with the same references. In this case, in addition to the conventional passenger compartment heater H, in the form of a heat exchanger arranged in said air guide duct 2, and connected to the main circuit H1 for the coolant of the internal combustion engine of the motor-vehicle, an auxiliary circuit H2 is also provided for the coolant of the internal combustion engine, including a closed loop path 901, 902 for the engine coolant, by means of which the liquid circulates through the condenser D' of the auxiliary refrigeration circuit F' and then through said heater H, and then going back through said condenser D'. An electrically-operated pump P' activates circulation of the liquid through the auxiliary circuit H2 for the coolant.

Only the evaporator E' is arranged in the inlet portion 201 (so that the valve system of Figure 2 can be simplified). A single valve V10 enables the flow from the inlet 2A through the evaporator E' or from an auxiliary inlet 2A', from which the air can pass into the main portion 200 of the duct 2, without passing through the evaporator E'.

An electronically-controlled communication valve T controls the communication between the auxiliary circuit H2 and the main circuit H1 for the coolant. The valve T has:
- a first operating position in which the auxiliary circuit H2 for the coolant is insulated with respect to the main circuit H1, so that if the auxiliary refrigeration circuit F' is active, the liquid is able to draw heat from said condenser D' of the auxiliary refrigeration circuit and to deliver it by means of said passenger compartment heater H to an air flow directed towards the passenger compartment, even if the internal combustion engine is idle, and
- a second operating position in which the auxiliary circuit H2 for the coolant is in communication with the main circuit H1 for the coolant, (in particular with the radiator of the motor-vehicle), so that during operation of the internal combustion engine, the passenger compartment heater H receives liquid that is heated by said engine, according to the conventional art.

As can be seen, with this embodiment as well, it is possible to activate a cooling mode and a heating mode of the passenger compartment air, with the motor-vehicle stationary with the engine off and the driver out of the motor-vehicle.

A further advantage of the solution of Figure 13 lies in the fact that when the driver gets into the motor-vehicle and starts the engine, the engine coolant is already partially warm, so that the warm-up time is reduced and fuel consumption is decreased.

Of course, without prejudice to the principle of the invention, the details of construction and the embodiments may vary widely with respect to those described and illustrated purely by way of example, without departing from the scope of the present invention.

## Claims

1. A motor-vehicle (100) having an air conditioning system comprising:
- a main refrigeration circuit (F), including a compressor (C), a condenser (D), for receiving a flow of refrigerant from the compressor (C), an expansion valve (V) for receiving the refrigerant from the condenser (D), and an evaporator (E) for receiving the expanded refrigerant from said expansion valve (V),
- an air guide duct (2), for guiding a flow of air through the evaporator (E) of said main refrigeration circuit (F) and towards the passenger compartment (101) of the motor-vehicle (100), said air guide duct (2) being provided with at least one electrically-operated fan (3), upstream of the evaporator (E), for feeding said air flow through said air guide duct (2), wherein:
- the system also comprises an auxiliary refrigeration circuit (F'), including an auxiliary electrically-operated compressor (C'), an auxiliary condenser (D'), for receiving a flow of refrigerant from the auxiliary compressor (C'), an auxiliary expansion valve (V') for receiving the refrigerant from the auxiliary condenser (D'), and an auxiliary evaporator (E') for receiving the expanded refrigerant from said auxiliary expansion valve (V'),
- said air guide duct (2) includes an auxiliary inlet portion (201) - upstream of a main portion (200) of said air guide duct (2) which contains said evaporator (E) of the main refrigeration circuit (F),
said motor-vehicle being **characterized in that** it comprises:
- a main circuit (H1) for a coolant of an internal combustion engine, including a passenger compartment heater (H) in the form of a heat exchanger arranged in said air guide duct (2), and connected to said main cooling circuit,
- an auxiliary circuit (H2) for the coolant of the internal combustion engine, including:
- a closed-loop path (901,902) for the engine coolant, by means of which the liquid circulates through said condenser (D') of the auxiliary refrigeration circuit (F') and then through said passenger compartment heater (H), and then returns through said condenser (D'),
- an electrically-operated pump (P') to activate circulation of the liquid through said auxiliary circuit (H2) for the coolant,
- a communication valve (T) to control the communication between the auxiliary circuit (H2) for the coolant and the main circuit (H1) for the coolant, said valve (T) having:
- a first operating position in which the auxiliary circuit (H2) for the coolant is insulated with respect to the main circuit (H1) for the coolant, so that if the auxiliary refrigeration circuit (F') is active, the liquid is able to draw heat from said condenser (D') of the auxiliary refrigeration circuit and to deliver it by means of said passenger compartment heater (H) to an air flow directed towards the passenger compartment, even if the internal combustion engine is idle, and
- a second operating position in which the auxiliary circuit (H2) for the coolant is in communication with the main circuit (H1) for the coolant, so that during operation of the internal combustion engine, the passenger compartment heater (H) receives liquid that is heated by said engine.

2. A motor-vehicle according to claim 1, **characterized in that** a valve (V10) is arranged within said air guide duct (2) so that the main portion (200) of the air guide duct either communicates with said auxiliary inlet portion (201) in which the evaporator (E') of said auxiliary refrigeration circuit (F') is arranged, or with an auxiliary air inlet opening (2A'), through which an air flow can reach the main portion (200) of the air guide duct (2) without passing through the evaporator (E') of the auxiliary refrigeration circuit (F').

3. A motor-vehicle according to claim 1, **characterized in that** said motor-vehicle comprises one or more electronic control units (ECU) programmed to activate a refrigeration mode and a heating mode of the passenger compartment when the motor-vehicle is parked with the engine off, with the driver outside the motor-vehicle, said refrigeration mode and said heating mode comprising activating said auxiliary refrigeration circuit (F') and controlling said communication valve (T), in such a way as to enable an air flow into the passenger compartment of the motor-vehicle, which is cooled by said evaporator (E') of the auxiliary refrigeration circuit (F') or which is heated by said condenser (D') of the auxiliary refrigeration circuit (F').

4. A motor-vehicle according to claim 1, **characterized in that** said motor-vehicle also comprises:
- one or more electrically-operated windows (W, P),
- one or more electrically-operated shutter valves (101) arranged on the motor-vehicle structure, in a lower position with respect to the windows, so that the passenger compartment (10) of the motor-vehicle (100) communicates with the external environment,
and
- one or more electronic control units (ECU) programmed to activate a ventilation mode of the passenger compartment when the motor-vehicle is parked with the engine off, even with the driver outside the motor-vehicle, said passenger compartment ventilation mode comprising controlling at least partial opening of one or more windows (W) and the opening of one or more of said shutter valves (101) to generate a natural flow of air from the bottom upwards through the passenger compartment of the motor-vehicle.

5. A motor-vehicle according to claim 3, **characterized in that** said motor-vehicle comprises one or more electronic control units (ECU) programmed to activate a refrigeration mode and/or a heating mode and/or a ventilation mode of the passenger compartment when the motor-vehicle is parked with the engine off, with the driver outside the vehicle, said activation being controllable by the user by means of an electronic interface device such as a smart-phone, a tablet or the like.

## Patentansprüche

1. Kraftfahrzeug (100) mit einer Klimaanalage, umfassend:
- einen Hauptkältekreislauf (F) mit einem Kompressor (C), einem Kondensator (D) zur Aufnahme eines Kältemittelflusses aus dem Kompressor (C), einem Expansionsventil (V) zur Aufnahme des Kältemittels aus dem Kondensator (D) und einem Verdampfer (E) zur Aufnahme des expandierten Kältemittels aus dem Expansionsventil (V),
- einen Luftführungskanal (2) zur Leitung eines Luftstroms durch den Verdampfer (E) des Hauptkältekreislaufs (F) und zu dem Fahrgastraum (101) des Kraftfahrzeugs (100) hin, wobei der Luftführungskanal (2) mit mindestens einem elektrisch betätigten Lüfter (3) stromaufwärts des Verdampfers (E) versehen ist, um den Luftstrom durch den Luftführungskanal (2) zuzuführen, wobei:
- das System außerdem einen Hilfskältekreislauf (F') umfasst, der einen elektrisch betätigten Hilfskompressor (C'), einen Hilfskondensator (D') zur Aufnahme eines Kältemittelflusses aus dem Hilfskompressor (C'), ein Hilfsexpansionsventil (V') zur Aufnahme des Kältemittels aus dem Hilfskondensator (D') und einen Hilfsverdampfer (E') zur Aufnahme des expandierten Kältemittels aus dem Hilfsexpansionsventil (V') enthält,
- der Luftführungskanal (2) einen Hilfseinlassabschnitt (201) stromaufwärts eines Hauptabschnitts (200) des Luftführungskanals (2) einschließt, der den Verdampfer (E) des Hauptkältekreislaufs (F) enthält,
wobei das Kraftfahrzeug **dadurch gekennzeichnet ist, dass** es aufweist:
- einen Hauptkreislauf (H1) für ein Kühlmittel eines Verbrennungsmotors einschließlich einer Fahrgastraumheizung (H) in Form eines Wärmetauschers, der in dem Luftführungskanal (2) angeordnet und mit dem Hauptkühlkreislauf verbunden ist,
- einen Hilfskreislauf (H2) für das Kühlmittel des Verbrennungsmotors, der umfasst:
- einen geschlossenen Kreislauf (901, 902) für das Motorkühlmittel, mit dem die Flüssigkeit durch den Kondensator (D') des Hilfskältekreislaufs (F') und anschließend durch die Fahrgastraumheizung (H) zirkuliert und dann durch den Kondensator (D') zurückkehrt,
- eine elektrisch betätigte Pumpe (P') zum Auslösen einer Zirkulation der Flüssigkeit durch den Hilfskreislauf (H2) für das Kühlmittel,
- ein Verbindungsventil (T) zum Steuern der Verbindung zwischen dem Hilfskreislauf (H2) für das Kühlmittel und dem Hauptkreislauf (H1) für das Kühlmittel, wobei das Ventil (T) aufweist:
- eine erste Betriebsstellung, in welcher der Hilfskreislauf (H2) für das Kühlmittel bezüglich des Hauptkreislaufs (H1) für das Kühlmittel isoliert ist, so dass die Flüssigkeit, falls der Hilfskältekreislauf (F') wirksam ist, Wärme aus dem Kondensator (D') des Hilfskältekreislaufs abziehen und sie durch die Fahrgastraumheizung (H) einem Luftstrom zuführen kann, der zu dem Fahrgastraum hin gerichtet ist, auch wenn sich der Verbrennungsmotor im Leerlauf befindet, und
- eine zweite Betriebsstellung, in welcher der Hilfskreislauf (H2) für das Kühlmittel in Verbindung mit dem Hauptkreislauf (H1) für das Kühlmittel steht, so dass während des Betriebes des Verbrennungsmotors die Fahrgastraumheizung (H) Flüssigkeit aufnimmt, die durch den Motor erwärmt wird.

2. Kraftfahrzeug nach Anspruch 1, **dadurch gekennzeichnet, dass** ein Ventil (V10) innerhalb des Luftführungskanals (2) eingerichtet ist, so dass der Hauptteil (200) des Luftführungskanals entweder mit dem Hilfseinlassteil (201) in Verbindung steht, in welchem der Verdampfer (E') des Hilfskältekreislaufs (F') eingerichtet ist, oder mit einer Hilfslufteinlassöffnung (2A'), durch die ein Luftstrom den Hauptteil (200) des Luftführungskanals (2) erreichen kann, ohne den Verdampfer (E') des Hilfskältekreislaufs (F') zu umströmen.

3. Kraftfahrzeug nach Anspruch 1, **dadurch gekennzeichnet, dass** das
Kraftfahrzeug eine oder mehrere elektronische Steuereinheiten (ECU) umfasst, die zum Aktivieren eines Kühlmodus und eines Heizmodus des Fahrgastraums programmiert sind, wenn das Kraftfahrzeug bei abgeschaltetem Motor und mit dem außerhalb des Kraftfahrzeugs befindlichen Fahrer geparkt wird, wobei der Kühlmodus und der Heizmodus das Aktivieren des Hilfskältekreislaufs (F') und Steuern des Verbindungsventils (T) umfasst, derart, dass ein Luftstrom in den Fahrgastraum des Kraftfahrzeugs ermöglicht wird, der durch den Verdampfer (E') des Hilfskältekreislaufs (F') gekühlt wird oder der durch den Kondensator (D') des Hilfskältekreislaufs (F') erwärmt wird.

4. Kraftfahrzeug nach Anspruch 1, **dadurch gekennzeichnet, dass** das Kraftfahrzeug außerdem umfasst:
- ein oder mehrere elektrisch betätigte Fenster (W, P),
- ein oder mehrere elektrisch betätigte Klappenventile (101), die an der Kraftfahrzeugstruktur angeordnet sind, in einer tieferen Stellung bezüglich der Fenster, so dass der Fahrgastraum (10) des Kraftfahrzeugs (100) mit der äußeren Umgebung in Verbindung steht, und
- eine oder mehrere elektronische Steuereinheiten (ECU), die programmiert sind, um einen Belüftungsmodus des Fahrgastraums zu aktivieren, wenn das Kraftfahrzeug bei abgeschaltetem Motor auch mit dem außerhalb des Kraftfahrzeugs befindlichen Fahrer geparkt wird, wobei der Belüftungsmodus des Fahrgastraums das Regeln zumindest einer teilweisen Öffnung eines oder mehrerer Fenster (W) und die Öffnung eines oder mehrerer der Klappenventile (101) umfasst, um einen natürlichen Luftstrom von unten nach oben durch den Fahrgastraum des Kraftfahrzeugs zu erzeugen.

5. Kraftfahrzeug nach Anspruch 3, **dadurch gekennzeichnet, dass** das Kraftfahrzeug eine oder mehrere elektronische Steuereinheiten (ECU) umfasst, die programmiert sind, um einen Kühlmodus und/oder einen Heizmodus und/oder einen Belüftungsmodus des Fahrgastraums zu aktivieren, wenn das Kraftfahrzeug bei abgeschaltetem Motor mit dem außerhalb des Fahrzeugs befindlichen Fahrer geparkt wird, wobei die Aktivierung vom Anwender durch ein elektronisches Schnittstellengerät wie einem Smartphone, einem Tablet oder dergleichen steuerbar ist.

## Revendications

1. Véhicule automobile (100) ayant un système de climatisation comprenant :
- un circuit principal de réfrigération (F), comportant un compresseur (C), un condenseur (D), pour recevoir un flux de réfrigérant à partir du compresseur (C), un détendeur (V) pour recevoir le réfrigérant à partir du condenseur (D), et un évaporateur (E) pour recevoir le réfrigérant détendu à partir dudit détendeur (V),
- un conduit de guidage d'air (2), pour guider un flux d'air à travers l'évaporateur (E) dudit circuit principal de réfrigération (F) et vers l'habitacle (101) du véhicule automobile (100), ledit conduit de guidage d'air (2) étant muni d'au moins un ventilateur à commande électrique (3), en amont de l'évaporateur (E), pour introduire ledit flux d'air à travers ledit conduit de guidage d'air (2),
dans lequel :
- le système comprend également un circuit auxiliaire de réfrigération (F'), comportant un compresseur auxiliaire à commande électrique (C'), un condenseur auxiliaire (D'), pour recevoir un flux de réfrigérant à partir du compresseur auxiliaire (C'), un détendeur auxiliaire (V') pour recevoir le réfrigérant à partir du condenseur auxiliaire (D'), et un évaporateur auxiliaire (E') pour recevoir le réfrigérant détendu à partir dudit détendeur auxiliaire (V'),
- ledit conduit de guidage d'air (2) comporte une partie auxiliaire d'entrée (201) en amont d'une partie principale (200) dudit conduit de guidage d'air (2) qui contient ledit évaporateur (E) du circuit principal de réfrigération (F),
ledit véhicule automobile étant **caractérisé en ce qu'**il comprend :
- un circuit principal (H1) pour un liquide de refroidissement d'un moteur à combustion interne, comportant un dispositif de chauffage d'habitacle (H) sous la forme d'un échangeur de chaleur agencé dans ledit conduit de guidage d'air (2), et relié audit circuit principal de refroidissement,
- un circuit auxiliaire (H2) pour le liquide de refroidissement du moteur à combustion interne, comportant :
- un trajet en boucle fermée (901, 902) pour le liquide de refroidissement de moteur, au moyen duquel le liquide circule à travers ledit condenseur (D') du circuit auxiliaire de réfrigération (F') et ensuite à travers ledit dispositif de chauffage d'habitacle (H), et ensuite retourne par ledit condenseur (D'),
- une pompe à commande électrique (P') pour activer la circulation du liquide à travers ledit circuit auxiliaire (H2) pour le liquide de refroidissement,
- une soupape de communication (T) pour commander la communication entre le circuit auxiliaire (H2) pour le liquide de refroidissement et le circuit principal (H1) pour le liquide de refroidissement, ladite soupape (T) ayant :
- une première position de fonctionnement dans laquelle le circuit auxiliaire (H2) pour le liquide de refroidissement est isolé par rapport au circuit principal (H1) pour le liquide de refroidissement, de sorte que, si le circuit auxiliaire de réfrigération (F') est actif, le liquide soit capable d'extraire la chaleur dudit condenseur (D') du circuit auxiliaire de réfrigération et de la fournir au moyen dudit dispositif de chauffage d'habitacle (H) à un flux d'air dirigé vers l'habitacle, même si le moteur à combustion interne est au ralenti, et
- une deuxième position de fonctionnement dans laquelle le circuit auxiliaire (H2) pour le liquide de refroidissement est en communication avec le circuit principal (H1) pour le liquide de refroidissement, de sorte que, pendant le fonctionnement du moteur à combustion interne, le dispositif de chauffage d'habitacle (H) reçoive le liquide qui est chauffé par ledit moteur.

2. Véhicule automobile selon la revendication 1, **caractérisé en ce qu'**une soupape (V10) est agencée dans ledit conduit de guidage d'air (2) de sorte que la partie principale (200) du conduit de guidage d'air communique soit avec ladite partie auxiliaire d'entrée (201) dans laquelle l'évaporateur (E') dudit circuit auxiliaire de réfrigération (F') est agencé, soit avec une ouverture auxiliaire d'entrée d'air (2A'), à travers laquelle un flux d'air peut atteindre la partie principale (200) du conduit de guidage d'air (2) sans passer à travers l'évaporateur (E') du circuit auxiliaire de réfrigération (F').

3. Véhicule automobile selon la revendication 1, **caractérisé en ce que** ledit véhicule automobile comprend une ou plusieurs unité(s) de commande électronique (ECU) programmée(s) pour activer un mode de réfrigération et un mode de chauffage de l'habitacle lorsque le véhicule automobile est garé avec le moteur coupé, avec le conducteur à l'extérieur du véhicule automobile, ledit mode de réfrigération et ledit mode de chauffage comprenant l'activation dudit circuit auxiliaire de réfrigération (F') et la commande dudit système de soupapes ou de ladite soupape de communication (T), de manière à permettre un écoulement de flux d'air dans l'habitacle du véhicule automobile, qui est refroidi par ledit évaporateur (E') du circuit auxiliaire de réfrigération (F') ou qui est chauffé par ledit condenseur (D') du circuit auxiliaire de réfrigération (F').

4. Véhicule automobile selon la revendication 1, **caractérisé en ce que** ledit véhicule automobile comprend également :
- une ou plusieurs vitre(s) à commande électrique (W, P),
- une ou plusieurs soupape(s) à commande électrique (101) agencée(s) sur la structure de véhicule automobile, dans une position inférieure par rapport aux vitres, de sorte que l'habitacle (10) du véhicule automobile (100) communique avec l'environnement extérieur, et
- une ou plusieurs unité(s) de commande électronique (ECU) programmée(s) pour activer un mode de ventilation de l'habitacle lorsque le véhicule automobile est garé avec le moteur coupé, même avec le conducteur à l'extérieur du véhicule automobile, ledit mode de ventilation d'habitacle comprenant la commande d'une ouverture au moins partielle d'une ou de plusieurs vitre(s) (W) et l'ouverture d'une ou de plusieurs soupape(s) desdites soupapes d'obturation (101) pour générer un flux naturel d'air de bas en haut à travers l'habitacle du véhicule automobile.

5. Véhicule automobile selon la revendication 3, **caractérisé en ce que** ledit véhicule automobile comprend une ou plusieurs unité(s) de commande électronique (ECU) programmée(s) pour activer un mode de réfrigération et/ou un mode de chauffage et/ou un mode de ventilation de l'habitacle lorsque le véhicule automobile est garé avec le moteur coupé, avec le conducteur à l'extérieur du véhicule, ladite activation pouvant être commandée par l'utilisateur au moyen d'un dispositif d'interface électronique tel qu'un téléphone intelligent, une tablette ou autre analogue.
